(19) Europäisches Patentamt
European Patent Office
Office européen des brevets

(11) Publication number: 0 207 787 B1

(12) EUROPEAN PATENT SPECIFICATION

(45) Date of publication of patent specification: **26.08.92**

(51) Int. Cl.5: **C10M 117/02**, H01B 3/18, //(C10N10/06,70:00)

(21) Application number: **86305124.9**

(22) Date of filing: **01.07.86**

# (54) Industrial gelling agent for hydrophobic organic liquids.

(30) Priority: **01.07.85 DE 3523473**

(43) Date of publication of application: **07.01.87 Bulletin 87/02**

(45) Publication of the grant of the patent: **26.08.92 Bulletin 92/35**

(84) Designated Contracting States: **CH FR GB IT LI NL SE**

(56) References cited:
**EP-A- 0 029 589**
**FR-A- 1 535 153**
**GB-A- 530 374**
**GB-A- 825 878**

(73) Proprietor: **MINNESOTA MINING AND MANUFACTURING COMPANY**
**3M Center, P.O. Box 33427**
**St. Paul, Minnesota 55133-3427(US)**

(72) Inventor: **Gunther, John Minnesota Mining and**
**Manufacturing Co. 2501 Hudson Road P.O. Box 33427**
**St. Paul Minnesota 55133-3427(US)**

(74) Representative: **Baillie, Iain Cameron et al**
**c/o Ladas & Parry, Altheimer Eck 2**
**W-8000 München 2(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to industrial gelling agents, a method for the preparation of such gelling agents, and a method for impregnating electrical devices.

Hydrophobic organic liquids, particularly mineral oil or the like, are frequently used as impregnating agents, because of their water-repellant and electrically insulating properties, for instance for paper-insulated electrical cable, and/or as a filler material, for instance in cable connections, electrical transformers and the like. In this connection, it is particularly advantageous that the liquid state of aggregation makes it possible to completely fill a given space without leaving cavities which can be deleterious particularly in electrical installations. Furthermore, it is an advantage that many hydrophobic organic liquids have the property to creep even into smallest interstices. On the other hand, the use of a liquid as an impregnating or filling material requires a complete tightness of the enclosure into which the liquid is filled. This requirement often creates difficulties in practice. To circumvent these difficulties, it is known in the prior art to employ liquids which are solid at normal temperature and accordingly must be employed at elevated temperatures. In practical application, it is inconvenient to work at elevated temperatures and to provide therefore corresponding heating devices. Upon cooling-down, the liquid transforms into a solid mass which is no longer or still only slightly deformable; this is undesirable in several cases. Therefore, also the use of industrial gelling agents has been reported which are added to the liquid and after a certain time form with the latter a gel which no longer can flow out through leaks and remains deformable. Known gelling agents of this kind contain organic aluminum compounds, particularly poly-oxo-aluminum compounds, and react with hydroxyl or carboxyl groups to form a thioxotropic gel. In this manner, for instance, paints are provided with a, typically, desirable thixotropic property. Poly-oxo-aluminum compounds of the kind indicated are distributed, for instance, by the British company Manchem Ltd.

Frequently, hydrophobic organic liquids, particularly mineral oil or the like, do not comprise hydroxyl or carboxyl groups so that the said gelling agents cannot react directly with these liquids. This is particularly the case in all electrical applications because impregnating and filling materials used therefor shall not contain, as a rule, hydroxyl or carboxyl groups. In such cases, therefore, a reactant, mostly in the form of a liquid, which contains the groups necessary for the gelling reaction was additionally added upon the addition of the organic aluminum compound. For instance, solvents are suitable as reactant which contain hydroxyl or carboxyl groups. In practical application, it is inconvenient to additionally add the reactant. Also dosing errors may easily happen. Added thereto is the difficulty that the said organic aluminum compounds react very strongly with moisture and thus must be stored and shipped under an air-tight seal and must be handled with great care.

In the course of the gelling reaction, the reactive groups of the reactant are converted into electrically unobjectionable compounds, whereby the insulating properites of the liquid improve gradually to the original value. This can be observed from the increase of the dielectric loss factor which can be easily measured. Normally, it will last several days until the electrical insulating properties of the gelled liquid have improved so far that an operational electrical load is again possible. This long waiting time until the respective devices are put into operation is very inconvenient and causes considerable costs and waste times.

It is the object of the invention to provide an industrial gelling agent particularly for electrical applications, which is more conveniently applicable and makes possible to shorten the aforedescribed waiting times.

Briefly, the present invention provides a solid, powder-like industrial gelling agent for hydrophobic organic liquids, particularly mineral oil or the like, useful for impregnating electrical devices, particularly cable connections, consisting essentially of the stoichiometric reaction of poly-oxo-aluminum stearate of the formula

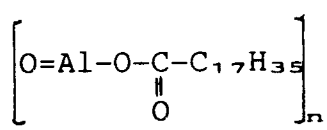

with a low alkanoic acid having up to 10 carbon atoms, said agent gelling within a one hour period, such that an electrical load can be resumed in said electrical device.

In another aspect, a method is provided for preparing a solid powder-like industrial gelling agent for hydrophobic organic liquids, immiscible with water, particularly mineral oil or the like, useful for impregnating electrical devices, particularly cable connections, characterized by reacting the stoichiometric reaction of poly-oxo-aluminum stearate of the formula

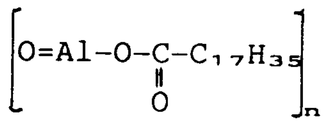

with a low alkanoic acid having up to 10 carbon atoms, said reaction occurring at from 100 ° C to 140 ° C, to a solid reaction product forming the gelling agent, and optionally comminuting the product.

In still another aspect, a method is provided for impregnating electrical devices, particularly cable connections, with an electrically non-conductive organic liquid, particularly mineral oil or the like, the method comprising providing the liquid with an added gelling agent in a cavity provided in the device, characterized by using a solid powder-like gelling agent as described above.

The industrial gelling agent of the present invention is a solid matter which is the result of a reaction of the stated poly-oxo-aluminum salts and the other stated alkanoic acid reactant. It has been found that the industrial gelling agent according to the invention obviously because of its property as being a reaction product, is insensitive towards moisture and can be easily handled and stored, and will cause the desired gelling in a very short time after being added to the liquid to be thickened which need not contain groups capable of reacting with poly-oxo-aluminum salt, the electrical insulating properties of the obtained gel permitting to apply immediately an electrical load to the gel, thus putting the respective electrical device into operation. The gelling agent according to the invention is an almost inert solid matter which can be stored and handled without particular precautions. Preferably, the gelling agent according to the invention is pulverized. Then, it needs only be sprayed or intermixed into the liquid to be gelled, whereupon the gelling takes place within a comparably very short time, for instance one hour. Use of the specified poly-oxo-aluminum salt and the specified alkanoic acid reactant, allows powder-like gelling agents to be obtained which are capable of effecting in mineral oil a gelling time of less than one hour.

With the gelling agent according to the invention, the reaction time needed for the reaction between the specified poly-oxo-aluminum salt and the alkanoic acid reactant obviously is transferred into the preparation of the gelling agent because, normally, this reaction requires a reaction time of several hours at elevated temperatures of particularly 120 ° C. In the preparation of the gelling agent according to the invention, these reaction conditions are not disadvantageous. Decisive and surprising is the fact that in practical application, only a very short gelling time is necessary.

More particularly, it is possible to obtain, by few experiments, utilizing the specified reagents gelling agents prepared therefrom in accordance with the invention capable of effecting a gelling time in mineral oil of below 10 minutes. In this connection, it is also of importance that in practical application, the gelling time is dependent upon the particle size of the solid matter gelling agent according to the invention. Therefore, a particle size corresponding to a desired gelling time can be selected, with smaller particle sizes corresponding to short gelling times.

In the application of the gelling agent according to the invention, it is not necessary to elevate the temperature. It suffices to intermix the gelling agent with the liquid at room or ambient temperature. No further substances like solvents and the like need be added; accordingly, also all problems encountered with such additional materials with respect to storage and environmental pollution are dispensed with. The gel obtained with insulating oils, for instance hydrocarbon oils has good electrical insulating properties already shortly after its preparation, whereby the device in which this gel is provided can be put into operation without delay. The gel has a very good temperature resistivity and can be maintained free of decomposition at temperatures of at least about 150 ° C.

Particularly advantageous properties is provided by a gelling agent, according to the invention, which has been obtained when said low alkanoic acid having up to 10 carbon atoms is 2-ethyl hexanoic acid of the formula

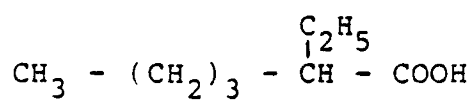 .

This gelling agent has a density in the range of the density of the liquids usually to be gelled, as for instance mineral oil. The density can be set within a certain range in accordance with the degree of polymerization of the organic aluminum salt. For instance, the density can be slightly greater than the density of the liquid to be gelled. This is advantageous particularly upon the intermixing. For instance, the density can be about 0.97 g/$cm^3$.

As indicated the preparation of the industrial gelling agent according to the invention is characterized by reacting a specified poly-oxo-aluminum salt of a fatty acid with the specified alkanoic acid reactant to a solid reaction product forming the gelling agent, and possibly comminuting the product. Thus, only simple operational steps are necessary for the preparation.

In order that the gelling agent obtained as a solid reaction product does not have disturbing alien properties, it is appropriate to react the specified poly-oxo-aluminum salt essentially completely with a stoichometric amount of the reactant.

The specified low alkanoic acid, having up to ten carbon atoms and preferably having five to ten carbon atoms, is preferably ethyl or propyl hexanoic acid. The reactant 2-ethyl hexanoic acid has been found to be particularly useful in practice.

The reaction between the specified poly-oxo-aluminum salt and the specified alkanoic acid reactant is performed at 100 to 140 °C, preferably at 120 °C. Then, a smooth reaction is obtained in a short reaction time and without the danger of decomposition.

The application of the gelling agent according to the invention is very simple and offers particular advantages in the impregnation of electrical devices, particularly cable connections, with an electrically non-conductive organic liquid, particularly mineral oil or the like, wherein the liquid including the added gelling agent is disposed n a cavity provided in the device. In accordance with the invention, a solid, powder-like gelling agent according to the invention is used for this purpose. For instance, the gelling agent can be sprayed or filled into the cavity which is already filled with the liquid. However, a method is particularly advantageous in which the gelling agent is added to the liquid prior to the introduction thereof into the cavity; in accordance with the invention, the gelling agent is added to the liquid immediately prior to the introduction of the latter into the cavity. Then, the mixture remains sufficiently long of low viscosity to be able to creep, like the liquid, into all cavities and interstices.

## Claims

1. A solid, powder-like industrial gelling agent for hydrophobic organic liquids, particularly mineral oil or the like, useful for impregnating electrical devices, particularly cable connections, consisting essentially of the stoichiometric reaction of poly-oxo-aluminum stearate of the formula

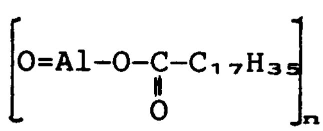

with a low alkanoic acid having up to 10 carbon atoms, said agent gelling within a one hour period, such that an electrical load can be resumed in said electrical device.

2. The gelling agent according to claim 1 wherein said alkanoic acid comprises 5 to 10 carbon atoms.

3. The gelling agent according to claim 1, wherein said low alkanoic acid is 2-ethyl hexanoic acid of the formula

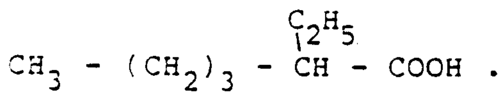

4. The gelling agent according to any one of the preceding claims, characterised in that it is pulverized.

5. The gelling agent according to claim 4, characterized in that its particle size is selected in correspondence with the desired gelling time, with smaller particle sizes corresponding to shorter gelling times.

6. A method for preparing a solid, powder-like industrial gelling agent for hydrophobic organic liquids, immiscible with water, particularly mineral oil or the like, useful for impregnating electrical devices, particularly cable connections, characterized by reacting the stoichiometric reaction of poly-oxo-aluminum stearate of the formula

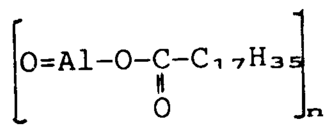

with a low alkanoic acid having up to 10 carbon atoms, said reaction occurring at from 100 °C to 140 °C, to a solid reaction product forming the gelling agent, and optionally comminuting the product.

7. The method according to claim 6 wherein said low alkanoic acid is ethyl or propyl hexanoic acid.

8. A method for impregnating electrical devices, particularly cable connections, with an electrically non-conductive organic liquid, particularly mineral oil or the like, the method comprising providing the liquid with an added gelling agent in a cavity provided in the device, characterized by using a solid powder-like gelling agent according to any one of claims 1 to

5.

**9.** A method according to claim 8, comprising adding the gelling agent to the liquid prior to introducing the latter into the cavity, characterized by adding the gelling agent to the liquid immediately prior to introducing the latter into the cavity.

## Patentansprüche

**1.** Zum Imprägnieren von elektrischen Einrichtungen geeignete, insbesondere Kabelverbindungen, geeignetes, festes, pulverartiges industrielles Geliermittel für hydrophobe organische Flüssigkeiten, insbesondere Mineralöl oder dergl., das im wesentlichen aus dem stöchimetrischen Reaktionsprodukt eines Polyoxo-aluminiumstearats der Formel

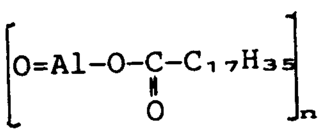

mit einer niederen Alkansäure mit bis zu 10 Kohlenstoffatomen besteht, wobei das genannte Mittel innerhalb einer Stunde eine solche Gelierung bewirkt, daß die genannte elektrische Einrichtung elektrisch belastbar ist.

**2.** Geliermittel nach Anspruch 1, dadurch gekennzeichnet, daß die Alkansäure 5 bis 10 Kohlenstoffatome besitzt.

**3.** Geliermittel nach Anspruch 1, dadurch gekennzeichnet, daß die niedere Alkansäure die 2-Ethylhexansäure der Formel

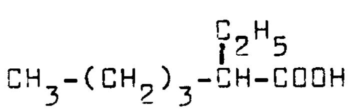

ist.

**4.** Geliermittel nach einem der vorhergehenden Ansprüche, dadurch gekennzeichnet, daß es pulverisiert ist.

**5.** Geliermittel nach Anspruch 4, dadurch gekennzeichnet, daß seine Korngröße nach Maßgabe der gewünschten Gelierzeit gewählt ist, wobei kleinere Korngrößen kürzeren Gelierzeiten entsprechen.

**6.** Verfahren zum Erzeugen eines zum Imprägnieren von elektrischen Einrichtungen, insbesondere Kabelverbindungen, geeigneten, festen, pulverartigen industriellen Geliermittels für mit Wasser unvermischbare hydrophobe organische Flüssigkeiten, insbesondere Mineralöl oder dergleichen, dadurch gekennzeichnet, daß das stöchiometrische Reaktionsprodukt des Poly-Oxoaluminiumstearats der Formel

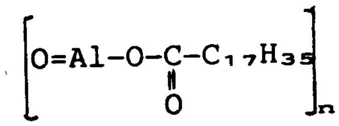

mit einer niederen Alkansäure mit bis zu 10 Kohlenstoffatomen bei 100 bis 140° C zu einem das Geliermittel bildenden festen Reaktionsprodukt umgesetzt und das Produkt gegebenenfalls zerkleinert wird.

**7.** Verfahren nach Anspruch 6, dadurch gekennzeichnet, daß die niedere Alkansäure die Ethyl- oder Propylhexansäure ist.

**8.** Verfahren zum Imprägnieren von elektrischen Einrichtungen, insbesondere Kabelverbindungen, mit einer elektrisch nichtleitfähigen organischen Flüssigkeit, insbesondere Mienralöl oder dergl., wobei die Flüssigkeit und ein zugesetztes Geliermittel in einen in der Einrichtung vorhandenen Hohlraum eingebracht werden, gekennzeichnet durch die Verwendung eines festen, pulverartigen Geliermittels nach einem der Ansprüche 1 bis 5.

**9.** Verfahren nach Anspruch 8, in dem das Geliermittel der Flüssigkeit zugesetzt wird, bevor diese in den Hohlraum eingebracht wird, dadurch gekennzeichnet, daß das Geliermittel der Flüssigkeit zugesetzt wird, unmittelbar bevor diese in den Hohlraum eingebracht wird.

## Revendications

**1.** Agent gélifiant industriel, solide et pulvérulent, pour liquides organiques hydrophobes, en particulier l'huile minérale ou analogue, qu'on peut utiliser pour imprégner des dispositifs électriques, en particulier des raccords de câbles, résultant essentiellement de la réaction du stéarate de poly-oxo-aluminium répondant à la formule :

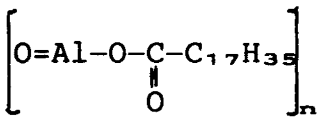

avec un acide alcanoïque inférieur comportant jusqu'à 10 atomes de carbone, ledit agent provoquant la gélification en l'espace d'une heure, de sorte qu'une charge électrique peut reprendre dans ledit dispositif électrique.

**2.** Agent gélifiant selon la revendication 1, où ledit acide alcanoïque comporte 5 à 10 atomes de carbone.

**3.** Agent gélifiant selon la revendication 1, où ledit acide alcanoïque est l'acide 2-éthylhexanoïque répondant à la formule :

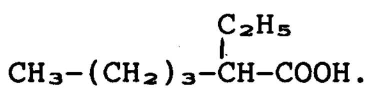

**4.** Agent gélifiant selon une quelconque des revendications précédentes, caractérisé en ce qu'il est pulvérisé.

**5.** Agent gélifiant selon la revendication 4, caractérisé en ce qu'on choisit sa grosseur de particules de façon à ce qu'elle corresponde au temps de gélification souhaité, des grosseurs de particules plus petites correspondant à des temps de gélification plus courts.

**6.** Procédé de préparation d un agent gélifiant industriel solide et pulvérulent pour liquides organiques hydrophobes non-miscibles avec l'eau, en particulier l'huile minérale ou analogue, qu'on peut utiliser pour imprégner des dispositifs électriques, en particulier des raccords de câbles, caractérisé en ce qu'on effectue la réaction stoechiométrique du stéarate de poly-oxo-aluminium répondant à la formule :

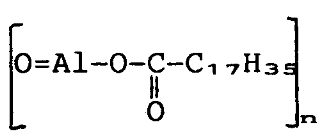

avec un acide alcanoïque inférieur comportant jusqu'à 10 atomes de carbone, ladite réaction se produisant à une température de 100 ° C à 140 ° C, pour obtenir un produit de réaction solide qui forme l'agent gélifiant, et on pulvérise éventuellement le produit.

**7.** Procédé selon la revendication 6, où ledit acide alcanoïque inférieur est l'acide éthyl- ou propylhexanoïque.

**8.** Procédé d'imprégnation de dispositifs électriques, en particulier des raccords de câbles, avec un liquide organique non-électroconducteur, en particulier l'huile minérale ou analogue, ledit procédé comprenant l'étape qui consiste à amener le liquide additionné d'un agent gélifiant dans une cavité prévue dans le dispositif, caractérisé en ce qu'on utilise un agent gélifiant solide et pulvérulent selon une quelconque des revendications 1 à 5.

**9.** Procédé selon la revendication 8, comprenant l'addition de l'agent gélifiant au liquide avant l'introduction de ce dernier dans la cavité, caractérisé en ce qu'on ajoute l'agent gélifiant au liquide directement avant d'introduire ce dernier dans la cavité.